## Europäisches Patentamt

## European Patent Office

## Office européen des brevets

(19)

(11) Numéro de publication: **0 079 821
B1**

(12)

# FASCICULE DE BREVET EUROPEEN

(45) Date de publication du fascicule du brevet:
**31.07.85**

(51) Int. Cl.⁴: **H 04 N 1/00**

(21) Numéro de dépôt: **82402023.4**

(22) Date de dépôt: **03.11.82**

(54) **Analyseur ligne par ligne d'un document équipé d'un dispositif de contrôle de la position du document.**

(30) Priorité: **17.11.81 FR 8121483**

(43) Date de publication de la demande:
**25.05.83 Bulletin 83/21**

(45) Mention de la délivrance du brevet:
**31.07.85 Bulletin 85/31**

(84) Etats contractants désignés:
**DE GB NL**

(56) Documents cités:
**EP - A - 0 031 728
FR - A - 2 120 171
US - A - 2 512 547
US - A - 2 807 414**

**IBM TECHNICAL DISCLOSURE BULLETIN, vol. 23, no.
7A, décembre 1980, pages 2695-2696, New York (USA);
R.J. PERKINS: "Paper edge sensor"
IBM TECHNICAL DISCLOSURE BULLETIN, vol. 24, no.
1B, juin 1981, pages 547-548, New York (USA); M. KIDA:
"Short-paper detection in paper path"**

(73) Titulaire: **THOMSON-CSF, 173, Boulevard Haussmann,
F-75379 Paris Cedex 08 (FR)**

(72) Inventeur: **Boutrois, Guy, THOMSON-CSF SCPI 173, bld
Haussmann, F-75379 Paris Cedex 08 (FR)**

(74) Mandataire: **Weinmiller, Jürgen, Zeppelinstrasse 63,
D-8000 München 80 (DE)**

BUNDESDRUCKEREI BERLIN

## Description

La présente invention concerne un analyseur pour l'analyse ligne par ligne d'un document au moyen de n photosenseurs (n entier supérieur à 1), équipé d'un dispositif de contrôle du passage du document à analyser qui comporte: m des n photosenseurs, une mire disposée dans le champ de lecture des m photosenseurs, du côté opposé aux photosenseurs par rapport à la surface de défilement du document devant les photosenseurs, et un circuit de comparaison couplé aux m photoseurs.

De tels analyseurs existent, ils sont connus en particulier par le brevet US-A-2 512 547 où la mire est une mire mobile dessinée sur une courroie de transport des documents; cette courroie forme une boucle tendue entre deux cylindres parallèles qui tournent autour de leurs axes, entraînant la courroie. La mire comporte un ensemble de raies disposées longitudinalement sur la courroie et de raies disposées obliquement; une telle mire est de réalisation difficile car les raies longitudinales et obliques doivent être dessinées avec une grande précision sous peine d'introduire des risques d'erreur. De plus des poussières venant se déposer sur la mire peuvent également introduire des erreurs.

Il est également connu, par le brevet US-A-2 807 414, lorsque le document est analysé par transparence, de détecter le passage du document dans la fente d'analyse au moyen des photosenseurs; la détection se fait par la variation de luminosité au moment où le bord avant du document apparaît dans la fente. Un tel dispositif a deux inconvénients majeurs: il n'est pas applicable aux analyseurs où la source lumineuse qui éclaire le document est placée du même côté du document que les photosenseurs; il pose des problèmes pour l'analyse de documents dont le papier est très transparent car, alors, soit le dispositif de contrôle peut ne pas détecter le passage d'un document, soit il peut détecter un passage de document alors qu'il n'y a pas de document.

La présente invention a pour but d'éviter ou pour le moins de réduire les inconvénients précités.

Ceci est obtenu, en particulier, grâce à une mire et à l'utilisation, dans le circuit de comparaison, d'une mémoire et d'un circuit de comptage des différences entre les signaux de la mémoire et les signaux d'analyse.

Selon l'invention un analyseur pour l'analyse ligne par ligne d'un document au moyen de n photosenseurs (n entier supérieur à 1), équipé d'un dispositif de contrôle du passage du document à analyser qui comporte: m des n photosenseurs, une mire disposée dans le champ de lecture des m photosenseurs, du côté opposé aux photosenseurs par rapport à la surface de défilement du document devant les photosenseurs, et un circuit de comparaison couplé aux m photosenseurs, est caractérisé en ce que la mire est une mire fixe, dessinée sur un support et en ce que le circuit de comparaison comporte: une mémoire qui, au moins au début d'un processus de lecture d'un document, reçoit les signaux des m photosenseurs, un comparateur pour, au moins à partir d'un instant situé entre le début d'un processus de lecture et le début du passage du document entre la mire et les m photosenseurs, recevoir sur une première entrée les signaux fournis par les m photosenseurs et sur une seconde entrée les signaux de la mémoire et un circuit de comptage qui, pour chaque ligne d'analyse, compte les signaux de sortie du comparateur relatifs à des signaux différents sur les deux entrées du comparateur.

La présente invention sera mieux comprise et d'autres caractéristiques apparaîtront à l'aide de la description ci-après et des figures s'y rapportant qui représentent:

— la figure 1 une vue partielle schématique d'un analyseur selon l'invention, au niveau du système d'entraînement et de lecture du document,

— la figure 2 une vue en détail d'un élément de la figure 1,

— les figures 3 et 4 des schémas électroniques relatifs à des dispositifs de contrôle du positionnement correct du document avant sa lecture, dans un analyseur selon l'invention.

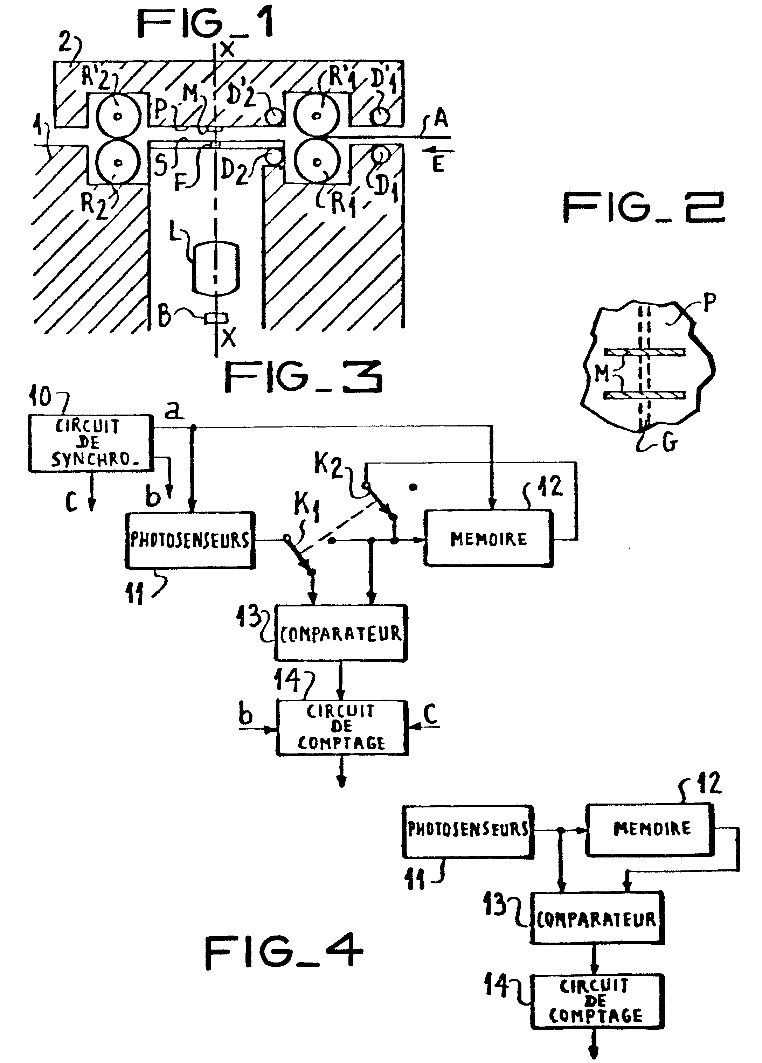

La figure 1 montre, en vue partielle, un analyseur destiné à l'analyse optique ligne par ligne d'un document A. Cet analyseur comporte deux parties: une partie inférieure, 1, formant support et une partie supérieure ou presse-papier, 2; un dispositif mécanique de positionnement et de blocage, non représenté, permet la mise en place en une position bien précise de la partie supérieure 2 par rapport à la partie inférieure 1.

La partie inférieure 1 présente une surface S sur laquelle passe le document A dans le sens indiqué par une flèche E, pendant son analyse. Cette analyse est effectuée au moyen d'une barrette de photosenseurs, B, solidaire de la partie inférieure et d'une optique, L, de grossissement, disposée entre la barrette B et une fenêtre de lecture, F, où s'effectue l'analyse du document.

La barrette de photosenseurs comporte un ensemble de photosenseurs disposés selon une ligne perpendiculaire au plan de la figure 1; dans l'exemple décrit il s'agit d'une barrette de 1 728 photosenseurs de 21 mm de long auquel l'optique de grossissement, L, permet de lire des lignes de document d'une longueur de 216 mm; l'axe optique de lecture par les photosenseurs a été symbolisé par une droite XX sur la figure 1.

Le défilement du papier est assuré par deux paires de rouleaux $R_1$ $R'_1$ et $R_2$ $R'_2$. Chaque paire comporte un rouleau entraîneur $R_1$, $R_2$ couplé à un moteur non représenté, et un rouleau libre $R'_1$ $R'_2$. Lors de son analyse le document est pincé entre les rouleaux de chaque paire.

Des ensembles de détection $D_1$ $D'_1$, $D_2$ $D'_2$ dont le rôle est indiqué ci-après, comportent chacun une source de lumière $D'_1$, $D'_2$ solidaire

de la partie supérieure 2 et un détecteur opto-électronique $D_1$, $D_2$ solidaire de la partie inférieure et en regard de la source de lumière à laquelle il est associé; sur la figure 1 les sources de lumière et les détecteurs ont été schématisés par des cercles.

L'ensemble de détection $D_1$ $D'_1$, est destiné à prévenir l'analyseur qu'un processus de lecture est déclenché, c'est-à-dire qu'un document, A, est présenté pour analyse (mais n'est pas encore en position d'analyse dans le champ de lecture des photosenseurs de la barrette B), afin de permettre le déclenchement des moteurs d'entraînement des rouleaux $R_1$ et $R_2$. L'ensemble $D_1$ $D'_1$ peut être remplacé par un bouton poussoir déclenché par l'opérateur au moment où va commencer l'analyse d'un document.

L'ensemble de détection $D_2$ $D'_2$ est destiné à prévenir l'analyseur qu'un document, A, arrive en fin d'analyse, afin d'autoriser l'arrêt des moteurs d'entraînement des rouleaux $R_2$ et $R'_2$.

Les ensembles de détection $D_1$ $D'_1$ et $D_2$ $D'_2$ n'ont pas besoin de détecter un document en un endroit bien précis de son passage dans l'analyseur; il n'est donc pas gênant d'utiliser des détecteurs optoélectroniques qui, en fonction de leur vieillissement, nécessiteront qu'une partie plus ou moins importante du faisceau lumineux qui est envoyé par la source de lumière qui leur est associée, soit occultée. Par contre il n'en va pas de même pour l'ensemble de détection qui doit fournir un signal permettant de placer correctement le document pour commencer son analyse c'est-à-dire d'arrêter le bord avant du document juste aus moment de son passage dans la fenêtre de lecture.

L'analyseur selon la figure 1 est également muni d'un ensemble de détection qui comporte une mire, M, schématisée par un petit rectangle disposé sous la surface, P, du presse-papier 2 en regard de la surface S de défilement du document. En fait cette mire M, dont une partie est représentée agrandie sur la figure 2, est faite de traits noirs, peints sur la surface blanche, P, du presse-papier. Ces traits sont disposés perpendiculairement à la partie, G, de la surface P du presse-papier, 2, qui est dans le champ des photosenseurs; les limites de la partie G ont été indiquées par des traits interrompus sur la figure 2. L'ensemble de détection dont fait partie la mire M, comporte également les photosenseurs qui ont la mire dans leur champ de lecture. La mire est donc lue par les photosenseurs jusqu'à ce que l'arrivée du bord avant du document à analyser dans la fenêtre, F, interrompe cette lecture.

La figure 3 est un exemple de réalisation d'un circuit électronique qui utilise les signaux de lecture fournis par les photosenseurs associés à la mire de la figure 1 pour délivrer un signal indiquant que le bord avant du document est dans la fenêtre de lecture. Ce circuit électronique comporte un ensemble 11 constitué par les photosenseurs et leurs registres de lecture, ensemble qui dans la suite de la description, sera appelé, par souci de simplification, »les photosenseurs, 11«; les signaux de sortie des photosenseurs 11 sont appliqués au point commun d'un interrupteur $K_1$ couplé mécaniquement à un interrupteur $K_2$. Une mémoire, 12, a son entrée reliée à la première borne de l'interrupteur $K_1$ et à la seconde borne de l'interrupteur $K_2$ et a sa sortie reliée au point commun de l'interrupteur $K_2$. Un comparateur 13 a ses entrées reliées à la seconde borne de l'interrupteur $K_1$ et à l'entrée de la mémoire 12 et a sa sortie reliée à l'entrée d'un circuit comptage 14; le circuit 14, qui est constitué d'un compteur suivi d'un circuit de décodage d'une valeur donnée du compte du compteur, délivre le signal indiquant que le bord avant du document est dans la fenêtre de lecture. Un circuit de synchronisation, 10, constitué par un circuit d'horloge dont les signaux de sortie sont commandés par le micro-calculateur de l'analyseur, fournit les signaux de synchronisation, a, nécessaires à la lecture du contenu des photosenseurs 11 et de la mémoire 12; cette dernière est constituée par un registre à décalage à 1 728 positions, c'est-à-dire un registre ayant une capacité égale à une ligne de lecture. Ces signaux a sont les signaux classiques de commande de photosenseurs que l'on retrouve dans les analyseurs connus; dans le cas de l'exemple décrit ce sont des paquets d'impulsions à 250 kHz. Des signaux b identiques aux signaux a mais retardés pour tenir compte des temps de transit dans le comparateur 13, sont également fournis par le circuit 10 et sont appliqués au circuit de comptage 14 pour autoriser, par leur présence, l'avance du compteur 14 en fonction des signaux reçus du comparateur 13; le circuit de comptage 14 est remis à zéro après chaque lecture de ligne, grâce à un signal c fourni par le circuit de synchronisation 10 et qui, lui aussi, est un signal que l'on retrouve dans les analyseurs connus pour commander le début de lecture des lignes.

Le fonctionnement des circuits de la figure 3 est le suivant. Avant chaque lecture les interrupteurs $K_1$ $K_2$, qui ont été représentés schématiquement par des interrupteurs mécaniques mais sont en fait des interrupteurs électroniques, sont dans la position où les photosenseurs, 11, sont réunis à l'entrée de la mémoire 12 tandis que la sortie de la mémoire 12 est reliée à la seconde borne, non connectée, de l'interrupteur $K_2$. Le signal de commande des interrupteurs $K_1$, $K_2$ est fourni par une sortie, non représentée, du circuit de synchronisation 10; ce signal est constitué par des impulsions de début de ligne de lecture: une première impulsion, fournie après que l'ensemble de détection $D_1$ $D'_1$ (figure 1) ait été déclenché, permet le stockage dans la mémoire 12 de la ligne lue par les photosenseurs, c'est-à-dire de la ligne de lecture de la mire, puisque le document n'est pas encore arrivé entre la mire et les photosenseurs; l'impulsion de début de ligne de lecture suivante fait basculer les interrupteurs dans la position représentée sur la figure 3. Le circuit de comptage 14 ne délivre aucun signal tant que les signaux de lecture fournis par les photosenseurs 11 sont sensiblement identiques aux signaux stockés dans la mémoire 12; à cet effet, pour tenir compte, par exemple de poussières qui en cours de fonctionnement viendraient à se déposer sur la mire, le circuit de décodage du circuit de comptage 14 ne décode pas la valeur 1 mais la valeur 8 de manière que la reconnaissance de la disparition de la mire corresponde à un nombre, au minimum égal à 8, de non-coïncidences entre les 1 728 informations fournis à chaque lecture par les photosenseurs et les 1 728 informations stockées dans la mémoire 12.

Un autre exemple de réalisation d'un circuit électronique qui utilise les photosenseurs de lecture du document pour délivrer un signal indiquant que le bord avant du document est dans la fenêtre d'analyse, est donné à la figure 4. Sur cette figure le circuit de synchronisation et les signaux de synchronisation n'ont pas été représentés pour simplifier l'expose et parce qu'ils découlent de la même technologie que ceux relatifs à la figure 3. Le circuit électronique représenté sur la figure 4 diffère de celui selon la figure 3 par la suppression des interrupteurs $K_1$, $K_2$, par la liaison directe entre la sortie des photosenseurs et l'entrée de la mémoire 12 et la première entrée du comparateur 13 et par la liaison directe entre la sortie de la mémoire 12 et la seconde entrée du comparateur 13. Dans le circuit électronique selon la figure 4 la ligne de lecture de la mire n'est pas, comme dans le cas de la figure 3, stockée dans la mémoire 12 avant le début de lecture du document, en effet, dans le cas de la figure 4, les signaux de lecture d'une ligne sont enregistrés dans la mémoire 12 à la place des signaux de lecture de la ligne précédente pour être comparés avec les signaux de lecture de la ligne suivante; à cet effet la mémoire 12 est constituée par un registre à décalage. La détection des bords d'un document repose sur la différence entre la dernière ligne de la lecture de la mire et la première ligne de lecture du document au moment de son arrivée devant la fenêtre de lecture, F.

La présente invention n'est pas limitée aux exemples décrits. C'est ainsi que la mire peut permettre de réaliser un analyseur dont la longueur de la ligne de lecture est automatiquement adaptée à la largeur du document à analyser; en effet, lorsque le document qui arrive devant la fenêtre de lecture est d'une largeur inférieure à la ligne complète lue par les photosenseurs, l'une au moins des deux extrémités de la partie de la mire placée dans la fenêtre de lecture F n'est pas cachée par le passage du document, il est donc possible, en fonction des résultats de la comparaison effectuée par le comparateur 13, de déterminer la largeur du document et de transmettre à la sortie de l'analyseur les informations de lecture limitées au document.

De même la mire peut être d'une largeur inférieure à celle de la ligne totale lue par les photosenseurs si bien qu'alors une partie seulement des photosenseurs sert à lire la mire.

Il est également possible de se passer des ensembles de détection $D_1 D'_1$, $D_2 D'_2$ de la figure 1. Pour cela la présence de document, au lieu d'être détectée par l'analyseur, peut, comme cela a été mentionné au début de cette description, être annoncée par l'opérateur qui appuie sur un bouton poussoir juste avant d'introduire le document dans l'analyseur. Quant à la fin du document à analyser, elle peut être détectée grâce, par exemple, aux circuits électroniques selon les figures 3 et 4; il y a recherche permanente de la mire au cours de la lecture du document et quand le circuit de comptage 14 ne fournit plus de signal de sortie, la mire est considérée comme retrouvée et l'analyse du document comme terminée; cette façon de déterminer la fin d'un document présente un inconvénient: une configuration semblable à la mire peut se trouver sur un document à analyser et déclencher un signal erroné de fin de document.

A noter également que la ligne de lecture de la mire qui est mise en mémoire pour servir de référence dans la comparaison (comparateur 13 des figures 3 et 4) peut être mise en mémoire morte et non pas introduite, par lecture de la mire, dans un registre à décalage au début de chaque opération de chargement d'un document, comme c'était le cas avec les circuits selon les figures 3 et 4; ce stockage en mémoire morte présente l'inconvénient de ne permettre de tenir compte ni des dégradations de la mire au cours du temps (poussières, usures . . . ), ni des erreurs de positionnement du presse-papier (partie supérieure 1 de la figure 1) lorsque ce presse-papier est amovible et est amené à être manipulé, ni du vieillissement des photosenseurs de lecture.

La présente invention s'applique à tous les domaines d'analyse ligne par ligne au moyen de photosenseurs: télécopieurs, photocopieurs.

**Revendications**

1. Analyseur pour l'analyse ligne par ligne d'un document au moyen de n photosenseurs (n entier supérieur à 1), équipé d'un dispositif de contrôle du passage du document à analyser qui comporte: m (11) des n (B) photosenseurs $(n + 1 > m > 0)$, une mire disposée dans le champ de lecture des m photosenseurs, du côté opposé aux photosenseurs par rapport à la surface (S) de défilement du document devant les photosenseurs, et un circuit de comparaison (12, 13, 14) couplé aux m photosenseurs, caractérisé en ce que la mire est une mire fixe, dessinée sur un support et en ce que le circuit de comparaison comporte: und mémoire (12) qui, au moins au début d'un processus de lecture d'un document, reçoit les signaux des m photosenseurs, un comparateur (13) pour, au moins à partir d'un instant situé entre le début d'un processus de lecture et le début du passage du document entre la mire et les m photosenseurs, recevoir sur une première entrée les signaux fournis par les m photosenseurs et sur une seconde entrée les signaux de la mémoire et un circuit de comptage (14) qui, pour chaque ligne d'analyse, compte les signaux de sortie du comparateur relatifs à des signaux différents sur les deux entrées du comparateur.

2. Analyseur selon la revendication 1, caractérisé en ce que le circuit de comparaison (12—14) comporte également un dispositif de commutation (K1, K2) qui relie les m photosenseurs d'abord à la mémoire (12) au début d'un processus de lecture de document, puis, avant que le document arrive dans le champ de lecture des m photosenseurs, à la première entrée du comparateur (13).

3. Analyseur selon la revendication 1, caractérisé en ce que la mémoire (12) et le comparateur (13) sont reliés en permanence aux m photosenseurs et en ce que la mémoire fournit à la seconde entrée du comparateur les signaux d'analye des m photosenseurs de la ligne de lecture précédant la ligne dont les signaux sont fournis par les m photosenseurs à la première entrée du comparateur.

## Patentansprüche

1. Analysator für die zeilenweise Analyse eines Dokumentes mittels n Lichtabtastern (n ganzzahlig und größer als 1), ausgestattet mit einer Vorrichtung zur Kontrolle des Durchgangs des zu analysierenden Dokumentes, die umfaßt: m (11) der n (B) Lichtabtaster (n+1>m>0), ein im Lesefeld der im Lichtabtaster abgeordnetes Strichgitter auf der Seite, welche den Lichtabtastern in bezug auf die Oberfläche (S) des Vorbeilaufens des Dokumentes vor den Lichtabtastern gegenüberliegt, und eine Vergleicherschaltung (12, 13, 14), welche an die m Lichtabtaster angekoppelt ist, dadurch gekennzeichnet, daß das Strichgitter ein festes Gitter ist, welches auf einen Träger aufgezeichnet ist, und daß die Vergleicherschaltung umfaßt: einen Speicher (12), der wenigstens am Anfang eines Leseprozesses zum Auslesen eines Dokumentes die Signale der m Lichtabtaster empfängt, einen Vergleicher (13), um wenigstens ab einem Zeitpunkt zwischen dem Beginn eines Leseprozesses und dem Beginn des Durchgangs des Dokumentes zwischen dem Gitter und den m Lichtabtastern an einem ersten Eingang die von den m Lichtabtastern gelieferten Signale und an einem zweiten Eingang die Signale des Speichers zu empfangen, und eine Zählschaltung (14), die für jede Analysezeile die Ausgangssignale des Vergleichers zählt, welche zu verschiedenen Signalen an den zwei Eingängen des Vergleichers gehören.

2. Analysator nach Anspruch 1, dadurch gekennzeichnet, daß die Vergleicherschaltung (12—14) ferner eine Umschaltvorrichtung (K1, K2) umfaßt, welche die m Lichtabtaster zunächst mit dem Speicher (12) am Beginn eines Leseprozesses zum Auslesen des Dokumentes verbindet und anschließend, bevor das Dokument im Lesefeld der m Lichtabtaster ankommt, mit dem ersten Eingang des Vergleichers (13) verbindet.

3. Analysator nach Anspruch 1, dadurch gekennzeichnet, daß der Speicher (12) und der Komparator (13) dauernd mit den Lichtabtastern verbunden sind und daß der Speicher zum zweiten Eingang des Vergleichers die Analysesignale der m Lichtabtaster der Lesezeile liefert, welche der Zeile vorausgeht, deren Signale die m Lichtabtaster an den ersten Eingang des Vergleichers anlegen.

## Claims

1. Analyzer for the line-by-line analysis of a document by means of n photosensors (n is an integer greater than 1) equipped with a device for controlling the passage of the document to be analyzed which comprises: m (11) of the n (B) photosensors (n+1>m>0) a grating disposed in the read field of the m photosensors on the side opposite the photosensors with respect to the surface (S) of the passage of the document in front of the photosensors, and a comparator circuit (12, 13, 14) coupled to the m photosensors, characterized in that the grating is a fixed grating drawn on a support and that the comparator circuit comprises: a memory (12) which, at least at the start of a process for reading a document, receives the signals of the m photosensors, a comparator (13) for receiving, at least from an instant between the start of a read process and the start of the passage of the document between the gratings and the m photosensors, at a first input the signals furnished by the m photosensors and at a second input the signals of the memory, and a counting circuit (14) which for each analysis line counts the output signals of the comparator associated with the different signals at the two inputs of the comparator.

2. Analyzer according to claim 1, characterized in that the comparator circuit (12—14) also comprises a changeover switch device (K1, K2) which connects the m photosensors firstly to the memory (12) at the start of a document reading process and then, before the document arrives in the read field of the m photosensors, to the first input of the comparator (13).

3. Analyzer according to claim 1, characterized in that the memory (12) and the comparator (13) are permanently connected to the m photosensors and that the memory supplies to the second input of the comparator the analysis signals of the m photosensors of the read line preceding the line whose signals are supplied by the m photosensors to the first input of the comparator.

0 079 821

FIG_1

FIG_2

FIG_3

FIG_4

7